Europäisches Patentamt

European Patent Office

Office européen des brevets

(19)

(11) Veröffentlichungsnummer : **0 329 640 B1**

(12) **EUROPÄISCHE PATENTSCHRIFT**

(45) Veröffentlichungstag der Patentschrift :
03.04.91 Patentblatt 91/14

(51) Int. Cl.$^5$ : **B65D 41/34, B29C 45/44**

(21) Anmeldenummer : **89890032.9**

(22) Anmeldetag : **07.02.89**

(54) **Garantieverschluss für Behälter und Spritzgusswerkzeug zum Herstellen des Verschlusses.**

(30) Priorität : 16.02.88 AT 356/88
14.11.88 AT 2783/88

(43) Veröffentlichungstag der Anmeldung :
23.08.89 Patentblatt 89/34

(45) Bekanntmachung des Hinweises auf die
Patenterteilung :
03.04.91 Patentblatt 91/14

(84) Benannte Vertragsstaaten :
AT BE CH DE ES FR GB GR IT LI NL SE

(56) Entgegenhaltungen :
EP-A- 0 004 500
FR-A- 2 499 519
PT-A- 74 017
US-A- 4 469 234

(73) Patentinhaber : Aichinger, Dietmar F.
Alteselweg 287
CH-4497 Rünenberg (CH)

(72) Erfinder : Aichinger, Dietmar F.
Alteselweg 287
CH-4497 Rünenberg (CH)

(74) Vertreter : Holzer, Walter, Dipl.-Ing. et al
Patentanwälte, Dipl.-Ing. Dr.techn. Schütz
Alfred, Dipl.-Ing. Holzer Walter Dipl.-Ing.
Pfeifer Otto Fleischmanngasse 9
A-1040 Wien (AT)

EP 0 329 640 B1

## Beschreibung

Die Erfindung betrifft einen Garantieverschluß für Behälter. wie Flaschen u.dgl., mit einer als Schraubkappe ausgebildeten Verschlußkappe aus Kunststoff, deren Mantel im Bereich des Mantelinnenumfanges über abreißbare Stege mit einem Garantieband verbunden ist, dessen Außenseite im Anschluß an die Stege einen nach außen und unten schräg verlaufenden Wandabschnitt hat und das auf seiner Innenseite zumindest ein Halteorgan trägt, welches sich in den vom Garantieband begrenzten Innenraum erstreckt und bei auf die Behältermündung aufgeschraubter Verschlußkappe einen unterhalb des Behälterschraubgewindes angeordneten ringförmigen Rastvorsprung des Behälters untergreift, wobei das Garantieband an seiner Innenseite im Bereich des Halteorganes eine zum unteren Garantiebandende offene, im wesentlichen axial verlaufende Umfangsausnehmung aufweist, von deren oberem Wandabschnitt sich das Halteorgan weg erstreckt.

An Behältern mechanisch verankerbare Garantiebänder haben gegenüber warmaufschrumpfbaren Garantiebändern den Vorteil. daß es genügt, wenn sie beim erstmaligen Aufschrauben der Schraubkappe auf die nach der MCA-Norm ausgebildete Behältermündung über den Rastvorsprung geschoben werden, weil sie infolge ihrer Elastizität unter dem Rastvorsprung einrasten können. wobei sich das Halteorgan gegebenenfalls nach oben umbiegt und in dieser Stellung verbleibt. Nach dem Einrasten des Halteorganes des Garantiebandes kann die Verschlußkappe nur unter Zerstörung des Garantiebandes abgeschraubt werden, wodurch das erstmalige Öffnen des Behälters angezeigt wird.

Aus der GB-A-2 022 063 ist bereits eine in einem Spritzgußvorgang herstellbare Verschlußkappe mit einem am Behälter mechanisch verankerbaren Garantieband bekannt, bei welchem das Halteorgan ein an der Innenseite des Garantiebandes umlaufender Wulst ist.

Aus der EP-A-0 166 572 ist ferner eine Verschlußkappe der einleitend angegebenen Art bekannt, bei welcher das Garantieband den ringförmigen Rastvorsprung mit Haltefingern untergreift, die nach unten erweitert ausgebildet sind.

Aus der FR-A-2 499 519 ist eine Verschlußkappe bekannt, deren Garantieband an der Innenseite mit gegenseitigem Umfangsabstand angeordnete Haltefinger trägt, die vom Innenumfang des Garantiebandes abstehen und gleichförmige Dicke mit parallel verlaufenden Innen- und Außenflächen haben. Die Haltefinger untergreifen einen Behälterwulst.

Aus der UP-AS-4 469 234 ist eine Schraubkappe bekannt, deren Garantieband im Querschnitt in Form eines umgedrehten U mit ungleich langen Schenkeln ausgebildet ist, wobei vom kürzeren inneren Schenkel Haltefinger nach unten ragen und hakenförmig nach oben gebogene Endabschnitte aufweisen, welche einen Behälterwulst untergreifen. Zum Aufbringen der Schraubkappe können sich die Haltefinger nach außen in das Innere des umgedrehten U bewegen.

Der wesentliche Nachteil der vorstehend erläuterten bekannten Garantiebänder besteht darin, daß die zum Herstellen der Verschlußkappen verwendeten, in axialer Richtung öffnenden Spritzgußwerkzeuge relativ aufwendig ausgebildet sind. Die Werkzeuge müssen nämlich zum Entformen des Garantiebandes zumindest aus drei Teilen bestehen, d.h. sie müssen im Axialschnitt betrachtet eine horizontale Formtrennlinie auf der Höhe der Unterkante der Verschlußkappe, eine von der Innenkante des Garantiebandes ausgehende, schräg nach außen und unten verlaufende Formtrennlinie und eine vom unteren Abschnitt des Garantiebandes im Bereich des Vorsprunges bzw. der Vorsprünge ausgehende vertikale Formtrennlinie aufweisen. Beim Entformungsvorgang wird zunächst der die schräge Formtrennlinie aufweisende Formteil nach unten bewegt, um den unteren Abschnitt des Garantiebandes im Bereich des Rastvorsprunges freizugeben, sodann wird der Kern nach unten bewegt, um die Innenseite der Verschlußkappe und des Garantiebandes freizulegen. Dadurch kann die noch vom äußeren Formteil gehaltene Garantiekappe aus diesem ohne Beschädigung des Garantiebandes axial nach oben ausgestoßen werden. Derartige Formungswerkzeuge sind in der Herstellung teuer und begrenzen außerdem wegen des dreistufigen Entformungsvorganges die Produktionsgeschwindigkeit.

Die vorliegende Erfindung zielt darauf ab, einen Garantieverschluß der einleitend angegebenen Art zu schaffen, dessen Verschlußkappe unter Beibehaltung der vorteilhaften axialen Entformbarkeit mit Hilfe eines Spritzgußwerkzeuges herstellbar ist, das ohne relativ zum Kern in vertikaler Richtung nach unten bewegbaren Formteil auskommt. Dies wird erfindungsgemäß dadurch erreicht, daß das Halteorgan im Axialschnitt, wie an sich bekannt, parallel verlaufende Innen- und Außenflächen hat oder daß das Halteorgan im Axialschnitt vom oberen Wandabschnitt nach unten konvergierende Innen- und Außenflächen hat und vorzugsweise dreieckig ausgebildet ist, und daß die radiale Tiefe der Umfangsausnehmung zumindest gleich der größten Breite des Halteorganes im Axialschnitt ist.

Diese Ausbildung ermöglicht es, den Formungsabschnitt des Spritzgußwerkzeuges für das Garantieband aus nur zwei Teilen auszubilden, nämlich einem äußeren Formteil und einem an diesen über die von der Garantiebandunterseite schräg nach außen verlaufende Formtrennlinie angrenzenden Kern. Beim Entformen wird nämlich vom Kern nach und nach die erwähnte Umfangsausnehmung des Garantiebandes freigelegt, so daß der Haltefinger bzw. die Haltefinger ohne Beschädigungsgefahr elastisch nach außen schwenken können. Erfindungsgemäß wird somit nach dem Entfernen des Formkernes eine unmittelbare Entformung der Verschlußkappe ermöglicht. Die Erfindung gestattet es, einfachere und billigere Spritzgußwerkzeuge zu verwenden, die längere Lebensdauer haben und eine größere Produktionsgeschwindigkeit ermöglichen.

Gegenstand der Erfindung ist ferner ein zum Herstellen des beschriebenen Garantieverschlusses dienendes Spritzgußwerkzeug mit einer Matrize und einem Formkern, die gemeinsam einen Formhohlraum für die Verschlußkappe begrenzen und in axialer Richtung relativ zueinander bewegbar sind, und mit einer axial bewegbaren Abstreifplatte, die gemeinsam mit dem Formkern einen Formhohlraum für das Garantieband begrenzt, sowie mit einem Ausstoßmechanismus für die Verschlußkappe, wobei die Formtrennlinie zwischen Matrize und Abstreifplatte von der Unterkante der Verschlußkappe ausgeht ; dieses Werkzeug ist erfindungsgemäß dadurch gekennzeichnet, daß die Abstreifplatte und der Formkern entlang einer gemeinsamen Formtrennlinie aneinandergrenzen, die von der unteren Innenkante des Garantiebandes schräg nach außen und unten verläuft, und daß der Formkern zumindest eine mit dem Formhohlraum oberhalb der schrägen Formtrennlinie in Verbindung stehende Ausnehmung zur Ausbildung des Halteorganes aufweist, die von einem Absatz des Kernes ausgeht und im Axialschnitt parallele oder nach unten konvergierende Seiten hat.

Vorzugsweise sind, wie an sich bekannt, mehrere mit gegenseitigem Umfangsabstand angeordnete Ausnehmungen zur Ausbildung von fingerförmigen Halteorganen vorgesehen.

Erfindungsgemäß bilden somit die Abstreifplatte und der Formkern die beiden Teile des Formungsabschnittes für das Garantieband. Beim Entformen wird vom Formkern nach und nach die erwähnte Umfangsausnehmung des Garantiebandes freigelegt, in welche das Halteorgan bzw. die Haltefinger ohne Beschädigungsgefahr elastisch hineinschwenken können, so daß nach dem Entfernen des Formkernes eine unmittelbare axiale Entformung der Verschlußkappe möglich ist. Das erfindungsgemäße Spritzgußwerkzeug ist einfach und billig und gewährleistet eine längere Lebensdauer sowie eine größere Produktionsgeschwindigkeit als die herkömmlichen Werkzeuge.

Weitere Merkmale der Erfindung werden nachfolgend an Ausführungsbeispielen unter Bezugnahme auf die Zeichnungen näher erläutert. Es zeigen :

Fig. 1 einen Axialschnitt des Garantieverschlusses gemäß der Erfindung,
Fig. 2 einen Schnitt nach der Linie II-II in Fig. 1,
Fig. 3 in einem vergrößerten Axialschnitt einen Teil der Verschlußkappe und das Garantieband des Verschlusses nach Fig. 1,

Fig. 4 in einem vergrößerten Axialschnitt eine abgewandelte Ausführungsform der Erfindung,
Fig. 5 einen Axialschnitt durch ein Spritzgußwerkzeug gemäß der Erfindung, und
Fig. 6 einen Axialschnitt durch das geöffnete Spritzgußwerkzeug vor dem Ausstoßen der Verschlußkappe.

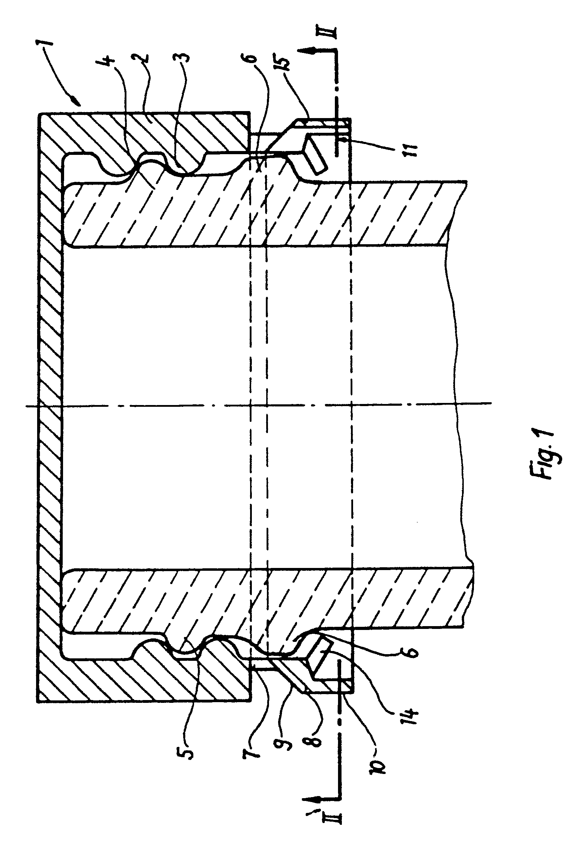

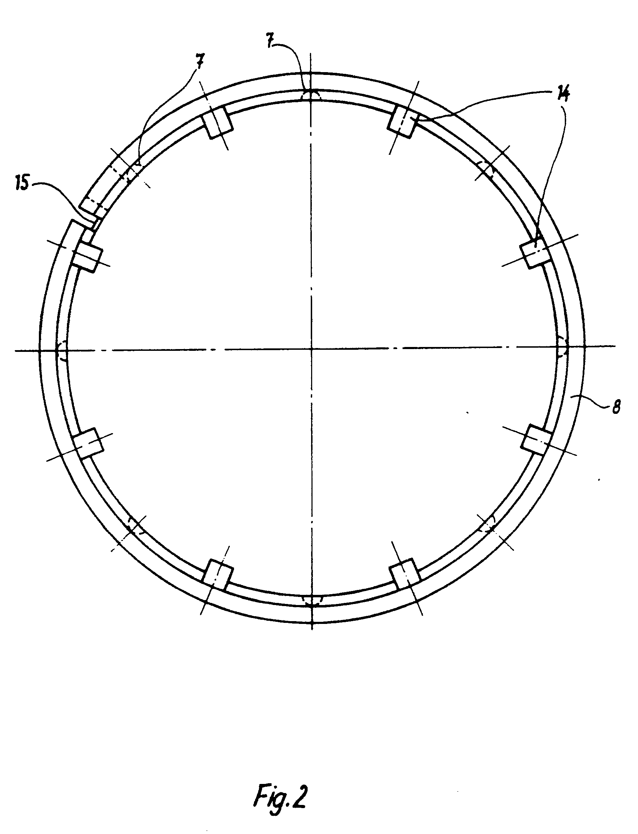

Der Garantieverschluß nach den Fig. 1 und 2 weist eine als Schraubkappe 1 ausgebildete zylindrische Verschlußkappe aus Kunststoff, insbesondere Polypropylen oder Polyäthylen auf, die an der Innenseite ihres Mantels 2 mit einem Schraubgewinde 3 versehen ist. Die Verschlußkappe 1 ist auf eine insbesondere nach der MCA-Norm ausgebildete Behältermündung 4 aufgeschraubt, die an ihrer Außenseite ein Schraubgewinde 5 trägt und unerhalb desselben mit einem als Wulst ausgebildeten ringförmigen Rastvorsprung 6 ausgestattet ist.

Am unteren Ende des Mantels 2 der Verschlußkappe 1 ist über eine Reihe von vertikalen, abreißbaren Stegen 7 ein Garantieband 8 befestigt, das einstückig mit der Verschlußkappe hergestellt ist. Die Stege 7 und der obere Abschnitt des Garantiebandes haben im wesentlichen gleichen oder geringfügig größeren Innendurchmesser wie der Mantel 2.

Das Garantieband 8 weist an seiner Außenseite einen sich von den Stegen 7 nach unten konisch erweiternden Außenwandabschnitt 9 und einen daran anschließenden zylindrischen Außenwandabschnitt 10 auf. An seiner Innenseite ist das Garantieband 8 mit einer Umfangsausnehmung 11 versehen, die von einem sich von der Innenwand des Garantiebandes nach außen und unten konisch erweiternden oberen Wandabschnitt 12 und einem an diesen anschließenden zylindrischen unteren Wandabschnitt 13 begrenzt ist. Die Umfangsausnehmung 11 ist somit zum unteren Ende des Garantiebandes hin offen. Vom oberen Innenwandabschnitt 12 des Garantiebandes ragen über den Bandumfang verteilt mehrere Haltefinger 14 nach innen, die bei aufgeschraubter Verschlußkappe (Fig. 1) den Rastvorsprung 6 des Behälters untergreifen. Das Garantieband kann ferner zumindest eine vertikale Sollbruchstelle 15 aufweisen, die in der rechten Hälfte von Fig. 1 und in Fig. 2 gezeigt ist.

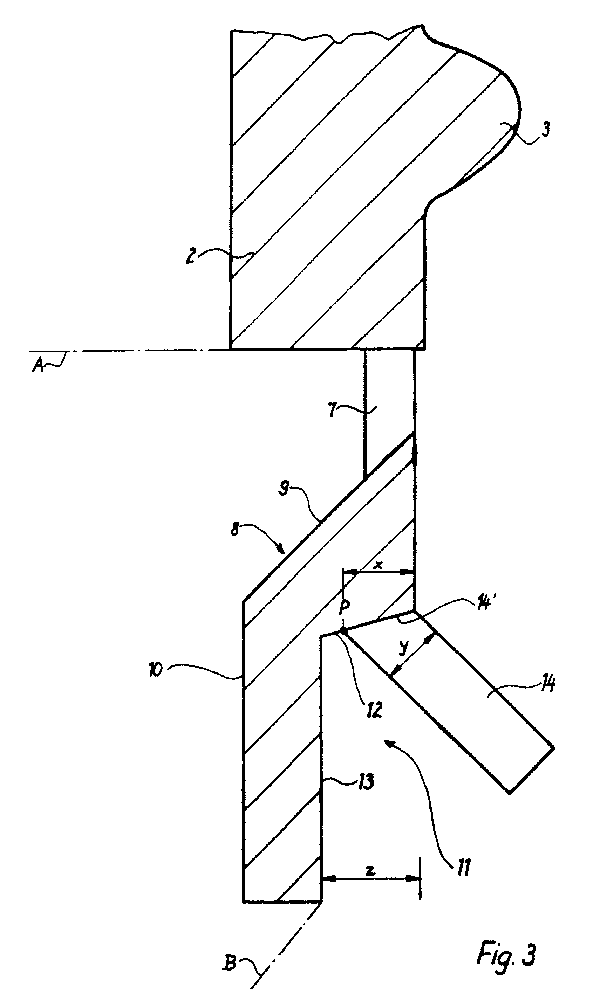

Wie aus Fig. 3 hervorgeht, erstreckt sich jeder Haltefinger 14 vom oberen Wandabschnitt 12 der Umfangsausnehmung 11 gegen das Innere des Garantiebandes. Der Haltefinger 14 hat im Axialschnitt parallel verlaufende Außen- und Innenflächen bzw. einen Körper mit der Dicke "y". Die Basis 14' des Haltefingers 14 erstreckt sich von der Innenwand des Garantiebandes bis zu einem Punkt P am oberen Wandabschnitt 12, dessen Radialabstand "x" von der Innenwand zumindest gleich der Haltefingerdicke "y" ist. Wie Fig. 3 ferner zeigt, ist die radiale Tiefe "z" der Umfangsausnehmung größer als der Radialabstand "x". Die vorstehend erläuterte Ausbildung ermöglicht es, eine axiale Entformung der Verschlußkappe samt Garantieband aus einem Spritzgußwerkzeug vorzunehmen, das im Axialschnitt mit lediglich zwei Formtrennlinien auskommt, nämlich der horizontalen Formtrennlinie A am unteren Ende des Kappenmantels und der schräg nach außen und unten verlaufenden Formtrennlinie B, die sich von der unteren Innenkante des Garantiebandes 8 wegerstreckt.

Im Rahmen der Erfindung können über den Umfang des Garantiebandes mehrere Haltefinger mit gegenseitigem Abstand angeordnet sein, wie dies Fig. 2 zeigt. Für eine einwandfreie Funktion sollten zumindest drei Haltefinger vorgesehen sein. Anstelle von einzelnen Fingern können auch Sektoren oder gegebenenfalls ein einziger Haltering ausgebildet werden. Wesentlich ist, daß die Tiefe "z" der Umfangsausnehmung zumindest gleich der größten Breite des Halteorganes im Axialschnitt ist, um eine einwandfreie Entformung zu ermöglichen.

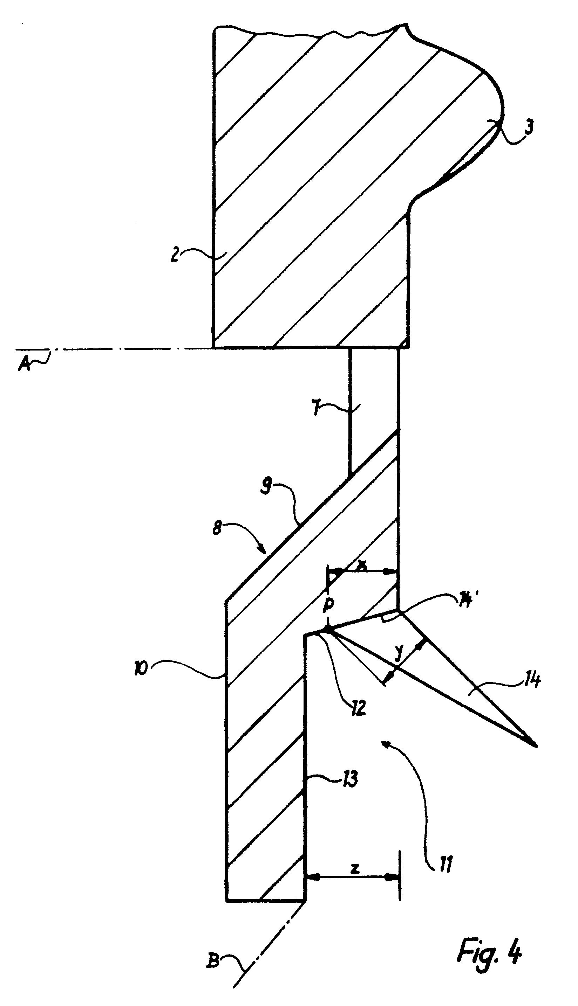

Bei dem in Fig. 4 dargestellten Ausführungsbeispiel ist der Haltefinger 14 im Axialschnitt dreieckig ausgebildet, wobei eine Dreieckseite mit dem oberen Wandabschnitt 12 der Umfangsausnehmung 11 zusammenfällt.

Im Rahmen der Erfindung kann der obere Innenwandabschnitt 12 der Umfangsausnehmung 11 statt konisch auch gegen die Innenseite des Garantiebandes konkav gewölbt ausgebildet sein. Ferner kann die Querschnittsform der Haltefinger von der dargestellten abweichen. Beispielsweise können die Haltefinger gekrümmt ausgebildet sein.

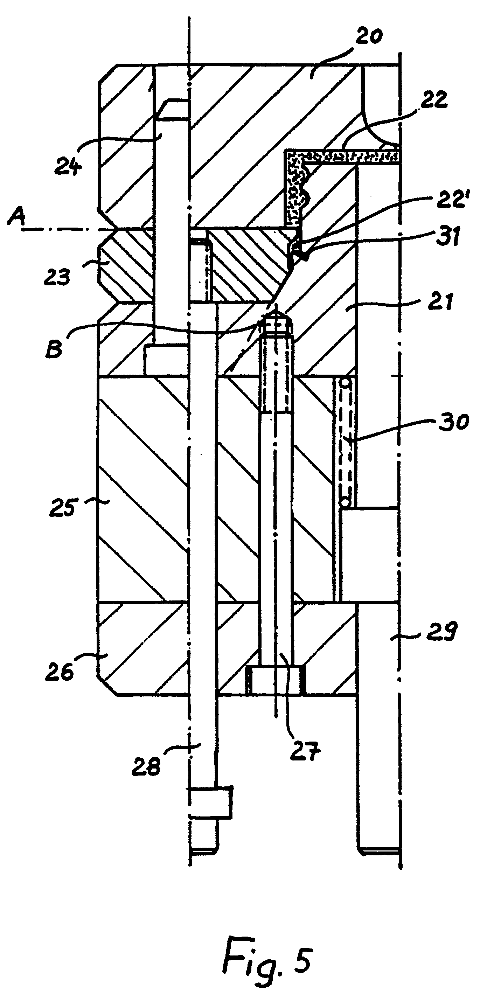

Fig. 5 zeigt das erfindungsgemäße Spritzgußwerkzeug im Axialschnitt. Das Werkzeug weist eine Matrize 20 und einen Formkern 21 auf, die gemeinsam einen Formhohlraum 22 für die eigentliche Verschlußkappe begrenzen. Unterhalb der Matrize 20 sowie zwischen dieser und dem Formkern 21 ist eine Abstreifplatte 23 angeordnet, die gemeinsam mit dem Formkern 21 einen Formhohlraum 22' für das Garantieband begrenzt. Der Formkern 21, die Abstreifplatte 23 und die Matrize 20 sind von axialen Führungsbolzen 24 durchsetzt.

An den Formkern 21 schließen in axialer Richtung nach unten ein Formteil 25 und eine Bodenplatte 26 an, die über Befestigungsbolzen 27 mit dem Formkern 21 verbunden sind. Die Formteile 21, 25, 26 werden von einer in die Abstreifplatte 23 eingeschraubten Abstreifstange 28 durchsetzt. Im Inneren des Formkernes 21 und in den Formteilen 25, 26 ist ein Ausstoßbolzen 29 verschiebbar, für den im Formteil 25 eine Rückstellfeder 30 vorgesehen ist.

Das Spritzgußwerkzeug hat somit im Axialschnitt lediglich zwei Formtrennlinien, nämlich die horizontale Formtrennlinie A am unteren Ende des Kappenmantels zwischen Matrize 20, Formkern 21 und Abstreifplatte 23, und die schräg nach außen und unten verlaufende Formtrennlinie B zwischen Formkern 21 und Abstreifplatte 23, wobei diese Trennlinie sich von der unteren Innenkante des Garantiebandes 8 wegerstreckt.

Der Formkern 21 weist mehrere, mit dem Formhohlraum 22' oberhalb der Formtrennlinie B in Verbindung stehende Ausnehmungen 31 zur Ausbildung der Haltefinger 14 auf, die von einem Absatz des Formkernes ausgehen und im Axialschnitt parallele oder nach unten konvergierende Seiten haben.

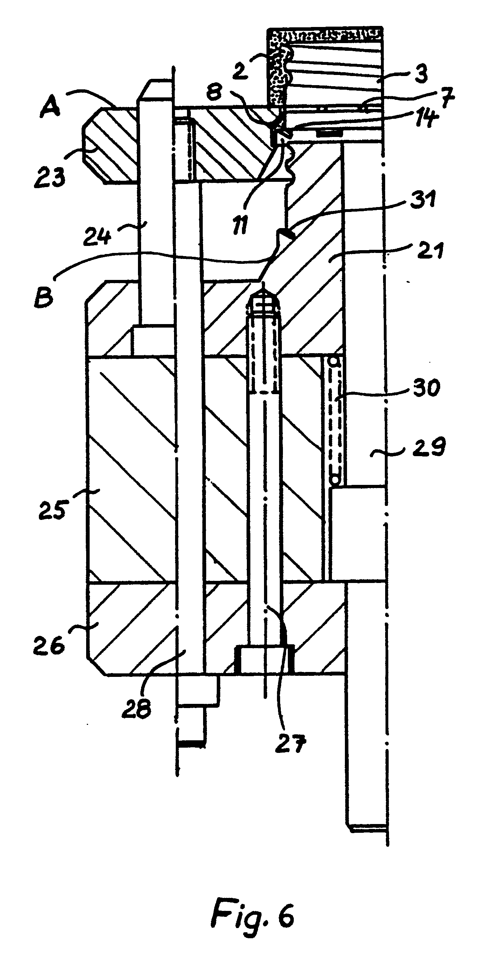

Beim Entformen wird zunächst die Matrize 20 nach oben bewegt und sodann die Abstreifplatte 23 mittels Stangen 28 ebenfalls nach oben bewegt, wie dies Fig. 6 zeigt, so daß sich die Kappe mit Garantieband relativ zum Formkern 21 nach oben bewegt und dabei die Haltefinger 14 aus den Ausnehmungen 31 in die vom Formkern nach und nach freigegebene Umfangsausnehmung 11 elastisch nach außen schwenken. wodurch die Gefahr eines Abscherens der Haltefinger vermieden wird.

Das erläuterte Ausführungsbeispiel kann im Rahmen der in den Ansprüchen definierten Erfindung abgewandelt werden. Wenn der obere Wandabschnitt 12 der Umfangsausnehmung 11 des Garantiebandes statt konisch z.B. gegen die Innenseite des Garantiebandes konkav gewölbt ausgebildet ist, wird auch der entsprechende Formteil gewölbt. Ferner könnten, wie erwähnt, die Haltefinger und die Ausnehmungen 31 auch gekrümmt ausgebildet sein.

## Ansprüche

1. Garantieverschluß für Behälter, wie Flaschen u.dgl., mit einer als Schraubkappe (1) ausgebildeten Verschlußkappe aus Kunststoff, deren Mantel (2) im Bereich des Mantelinnenumfanges über abreißbare Stege (7) mit einem Garantieband (8) verbunden ist, dessen Außenseite im Anschluß an die Stege einen nach außen und unten schräg verlaufenden Wandabschnitt (9) hat und das an seiner Innenseite zumindest ein Halteorgan (14) trägt, welches sich in den vom Garantieband begrenzten Innenraum erstreckt und bei auf die Behältermündung aufgeschraubter Verschlußkappe einen unterhalb des Behälterschraubgewindes angeordneten ringförmigen Rastvorsprung (6) des Behälters untergreift, wobei das Garantieband an seiner Innenseite im Bereich des Halteorganes eine zum unteren Garantiebandende offene, im wesentlichen axial verlaufende Umfangsausnehmung (11) aufweist, von deren oberem Wandabschnitt sich das Halteorgan weg erstreckt, dadurch gekennzeichnet, daß das Halteorgan (14) im Axialschnitt, gleichförmige Dicke mit, parallel verlaufenden Innen- und Außenflächen hat oder daß das Halteorgan (14) im Axialschnitt vom oberen Wandabschnitt (12) nach unten konvergierende Innen- und Außenflächen hat und vorzugsweise dreieckig ausgebildet ist, und daß die radiale Tiefe (z) der Umfangsausnehmung zumindest gleich der größten Breite (y) des Halteorganes im Axialschnitt ist.

2. Garantieverschluß nach Anspruch 1, dadurch gekennzeichnet, daß wie an sich bekannt, drei oder mehr Haltefinger (14) vorgesehen sind, die gegenseitigen Umfangsabstand haben.

3. Spritzgußwerkzeug zum Herstellen eines Garantieverschlusses nach Anspruch 1 oder 2, mit einer Matrize (20) und einem Formkern (21), die gemeinsam einen Formhohlraum (22) für die Verschlußkappe begrenzen und in axialer Richtung relativ zueinander bewegbar sind, und mit einer axial bewegbaren Abstreifplatte (23), die gemeinsam mit dem Formkern (21) einen Formhohlraum (22') für das Garantieband begrenzt, sowie mit einem Ausstoßmechanismus für die Verschlußkappe, wobei die Formtrennlinie zwischen Matrize (20) und Abstreifplatte (23) von der Unterkante der Verschlußkappe ausgeht, dadurch gekennzeichnet, daß die Abstreifplatte (23) und der Formkern (21) entlang einer gemeinsamen Formtrennlinie (B) aneinandergrenzen, die von der unteren Innenkante des Formhohlraumes (22') für das Garantieband schräg nach außen und unten verläuft, und daß der Formkern (21) zumindest eine mit dem Formhohlraum (22') für das Garantieband oberhalb der schrägen Formtrennlinie (B) in Verbindung stehende Ausnehmung (31) zur Ausbildung des Halteorganes aufweist, die von einem Absatz des Formkernes ausgeht und im Axialschnitt parallele oder nach unten konvergierende Seiten hat.

4. Spritzgußwerkzeug nach Anspruch 3, dadurch gekennzeichnet, daß wie an sich bekannt, mehrere mit gegenseitigem Umfangsabstand angeordnete Ausnehmungen (31) zur Ausbildung von fingerförmigen Halteorganen vorgesehen sind.

## Claims

1. Guarantee closure for containers, such as bottles and the like, having a closure cap of plastic which is designed as a screw cap (1) and the shell (2) of which is joined in the region of the shell inner circumference by means of tear-off tabs (7) to a guarantee strip (8), the outside of which has adjoining the tabs a wall section (9) running outwards and downwards at an angle and which bears on its inside at least one retaining member (14), which extends into the inner space bounded by the guarantee strip and, with closure cap screwed onto the container mouth, engages under an annular catching projection (6) of the container, arranged underneath the container screw thread, the guarantee strip having on its inner side in the region of the retaining member an essentially axially running circumferential recess (11), which is open towards the lower end of the guarantee strip and from the upper wall section of which the retaining member extends away, characterised in that the retaining member (14) has a uniform thickness in axial section, with parallel running inner and outer surfaces, or in that the retaining member (14) has in axial section inner and outer surfaces converging downwards from the upper wall section (12) and is preferably a triangular design, and in that the radial depth (z) of the circumferential recess is at least equal to the greatest width (y) of the retaining member in axial section.

2. Guarantee closure according to Claim 1, characterised in that, as known per se, three or more retaining fingers (14) are provided, which have a mutual circumferential spacing.

3. Injection mould for producing a guarantee closure according to Claim 1 or 2, having a cavity plate (20) and a mould core (21), which together bound a mould cavity (22) for the closure cap and are moveable relative to each other in the axial direction, and having an axially moveable stripper plate (23), which together with the mould core (21) bounds a mould cavity (22') for the guarantee strip, as well as having an ejection mechanism for the closure cap, the mould parting line between cavity plate (20) and stripper plate (23) extending from the lower edge of the closure cap, characterised in that the stripper plate (23) and the mould core (21) are adjacent to each other along a common mould parting line (B), which runs from the lower inner edge of the mould cavity (22') for the guarantee strip outwards and downwards at an angle, and in that the mould core (21) has at least one recess (31) for forming the retaining member, which recess is in connection with the mould cavity (22') for the guarantee strip above the angled mould parting line (B), extends from a shoulder of the mould core and has in axial section parallel or downwardly converging sides.

4. Injection mould according to Claim 3, characterised in that, as known per se, a plurality of recesses (31), arranged with a mutual circumferential spacing, are provided for the forming of finger-shaped retaining members.

## Revendications

1. Fermeture inviolable pour récipients tels que des bouteilles et objets similaires, présentant un capuchon obturateur en matière plastique réalisé sous la forme d'un capuchon vissable (1), dont l'enveloppe (2) est reliée au voisinage du pourtour périphérique interne, par l'intermédiaire de nervures déchirables (7), à un bandeau de garantie (8) dont la face extérieure comporte, dans la continuité des nervures, une région de paroi (9) s'étendant à l'oblique vers l'extérieur et vers le bas, ledit bandeau portant, sur sa face intérieure, au moins un organe de retenue (14) qui s'engage dans l'espace interne délimité par ledit bandeau de garantie et qui, lorsque le capuchon obturateur est vissé sur le goulot du récipient, emprisonne par-dessous une saillie annulaire d'encliquetage (6) du récipient, disposée au-dessous du filetage de ce récipient, le bandeau de garantie présentant sur sa face intérieure, au voisinage de l'organe de retenue, un évidement périphérique (11) qui est ouvert vers l'extrémité inférieure du bandeau de garantie, s'étend pour l'essentiel dans le sens axial, et de la région de paroi supérieure duquel l'organe de retenue part, caractérisée par le fait que l'organe de retenue (14) possède, en coupe axiale, une épaisseur uniforme avec des surfaces intérieure et extérieure s'étendant parallèlement ; ou par le fait que l'organe de retenue (14) possède, en coupe axiale, des surfaces intérieure et extérieure convergeant vers le bas à partir de la région de paroi supérieure (12), et est de préférence d'une réalisation triangulaire ; et par le fait que la profondeur radiale (z) de l'évidement périphérique est au moins égale à la largeur maximale (y) de l'organe de retenue en coupe axiale.

2. Fermeture inviolable selon la revendication 1, caractérisée par la présence, d'une manière connue par elle-même, de trois doigts de retenue (14) ou plus, qui présentent un espacement circonférentiel mutuel.

3. Outil de moulage par injection pour la fabrication d'une fermeture inviolable selon la revendication 1 ou 2, comprenant une matrice (20) et un noyau de moulage (21) qui délimitent conjointement une cavité (22) de moulage du capuchon obturateur, et sont mobiles l'un par rapport à l'autre dans le sens axial ; une plaque de dévêtissement (23) mobile axialement et délimitant, conjointement au noyau de moulage (21), une cavité (22') de moulage du bandeau de garantie ; ainsi qu'un mécanisme éjecteur du capuchon obturateur, la ligne de démoulage, entre la matrice (20) et la plaque de dévêtissement (23), partant de l'arête inférieure du capuchon obturateur, caractérisé par le fait que la plaque de dévêtissement (23) et le noyau de moulage (21) sont limitrophes le long d'une ligne commune de démoulage (B) qui s'étend à l'oblique, vers l'extérieur et vers le bas, à partir de l'arête interne inférieure de la cavité (22') de moulage du bandeau de garantie ; et par le fait que le noyau de moulage (21) présente, en vue de ménager l'organe de retenue, au moins un évidement (31) qui communique avec la cavité (22') de moulage du bandeau de garantie, au-dessus de la ligne oblique de démoulage (B), qui part d'un décrochement du noyau de moulage, et possède des côtés parallèles ou convergeant vers le bas en coupe axiale.

4. Outil de moulage par injection selon la revendication 3, caractérisé par la présence, d'une manière connue par elle-même, de plusieurs évidements (31) disposés avec espacement circonférentiel mutuel, en vue de ménager des organes de retenue en forme de doigts.

*Fig. 1*

EP 0 329 640 B1

*Fig.2*

Fig. 3

Fig. 4

Fig. 5

Fig. 6